(19) Europäisches Patentamt
European Patent Office
Office européen des brevets

(11) Veröffentlichungsnummer: **0 443 364 A2**

# (12) EUROPÄISCHE PATENTANMELDUNG

(21) Anmeldenummer: **91101565.9**

(51) Int. Cl.[5]: **B32B 5/24**

(22) Anmeldetag: **06.02.91**

(30) Priorität: **15.02.90 DE 4004599**

(43) Veröffentlichungstag der Anmeldung:
**28.08.91 Patentblatt 91/35**

(84) Benannte Vertragsstaaten:
**AT CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Gross, Bernd**
**Friedenstrasse 4**
**W-6711 Grossniedesheim(DE)**
Erfinder: **Weber, Heinz, Dr.**
**Am Wehrhaus 26**
**W-6718 Gruenstadt(DE)**

## (54) Laminate mit stabilen Befestigungsstellen.

(57) Die Erfindung betrifft Laminate mit stabilen Befestigungsstellen aus einer schaum- oder wabenförmigen Kernschicht A aus einem temperaturbeständigen Kunststoff und Deckschichten B aus faserverstärktem temperaturbeständigen Kunststoff, wobei die Kernschicht mindestens einen schaumförmigen Einsatz C, dessen Dichte höher ist als die Dichte des Kerns, aus einem temperaturbeständigen thermoplastischen Kunststoff aufweist.

EP 0 443 364 A2

Die Erfindung betrifft Laminate aus einer schaum- oder wabenförmigen Kernschicht aus einem temperaturbeständigen Kunststoff und mindestens einer Deckschicht aus einem faserverstärkten temperaturbeständigen Kunststoff.

Sandwich-Verbundelemente oder Mehrschichtplatten aus einem Schaumkern und faserverstärkten Deckschichten sind bekannt, z.B. aus EP-A 313 171. Sie finden insbesondere als Bauelemente beim Innenausbau von Luftfahrzeugen Anwendung. Problematisch ist bei solchen Bauteilen die geringe Stabilität an den Stellen, an denen Befestigungselemente, z.B. Schrauben oder Beschläge angebracht sind.

Der Erfindung lag daher die Aufgabe zugrunde, die Festigkeit des Kerns so zu verbessern, daß die Befestigungselemente den Beanspruchungen standhalten.

Die Lösung dieser Aufgabe besteht erfindungsgemäß darin, daß die Kernschicht durch mindestens einen schaumförmigen Einsatz mit höherer Dichte aus einem temperaturbeständigen Kunststoff verstärkt ist.

Gegenstand der Erfindung sind demzufolge Laminate mit stabilen Befestigungsstellen aus

A. einer schaum- oder wabenförmigen Kernschicht mit einer Dichte von 30 bis 150 kg $\cdot$ $m^{-3}$ aus einem temperaturbeständigen thermoplastischen oder duroplastischen Kunststoff a,

B. mindestens einer Deckschicht aus einem faserverstärkten temperaturbeständigen thermoplastischen oder duroplastischen Kunststoff b,

wobei die Kernschicht mindestens einen schaumförmigen Einsatz C einer Dichte von 200 bis 1000 kg $\cdot$ $m^{-3}$ aus einem temperaturbeständigen thermoplastischen Kunststoff c aufweist.

Die schaum- oder wabenförmige Kernschicht A weist eine Dichte von 30 bis 150, vorzugsweise von 40 bis 80 kg $\cdot$ $m^{-3}$, auf. Sie besteht aus einem temperaturbeständigen Kunststoff a. Bevorzugt sind schaumförmige Kernschichten aus thermoplastischen Kunststoffen, insbesondere

Polyethersulfone 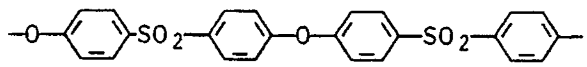 ,

Polysulfone 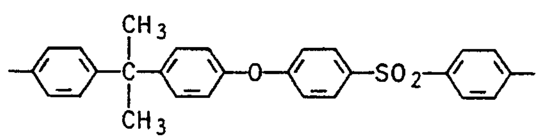 ,

Polyetherimide

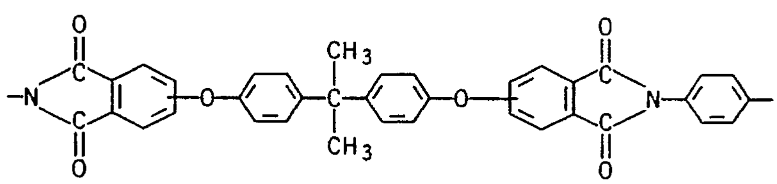

und Polyamide, wie z.B. Polyamid 6, Polyamid 6,6, Polyamid 4,6 und (teil)aromatische Polyamide.

Daneben sind auch thermoplastische Polyimide, Polyetherimide, Polycarbonat, Polyphenylensulfid und Polyphenylenether geeignet, sowie entsprechende Copolymere und Mischungen. Geeignete Duroplasten sind z.B. Epoxidharze, Phenol/Formaldehyd- und Melamin/Formaldehyd-Harze.

Die Kernschicht kann ferner wabenförmig sein und aus phenolharzgetränktem aromatischem Polyamid bestehen.

Die Kunststoffe sollen eine Wärmeformbeständigkeit nach DIN 53 461 (B) von mehr als 130 °C, vorzugsweise von mehr als 160 °C aufweisen.

Die Kernschicht hat vorzugsweise eine Dicke von 4 bis 40 mm, insbesondere von 5 bis 20 mm.

Die faserverstärkte Deckschicht B ist ungeschäumt. Als Kunststoffe kommen die selben Thermoplasten und Duroplasten b in Frage wie für die Kernschicht. Geeignete Fasern sind solche aus Glas, Kohlenstoff und aromatischem Polyamid. Die Fasern können als Gewebe, Gewirke, Matten oder als unidirektionale Gelege vorliegen. Bevorzugt sind Glasfasergewebe. Der Harzgehalt liegt im allgemeinen zwischen 20 und 60 Gew.-%.

Die Dicke der Deckschicht beträgt vorzugsweise 0,1 bis 1,5 mm, insbesondere 0,2 bis 0,6 mm.

Erfindungsgemäß weist die Kernschicht mindestens einen schaumförmigen Einsatz C höherer Dichte aus einem temperaturbeständigen thermoplastischen Kunststoff c auf. Dabei kommen die gleichen Thermoplasten wie bei a in Frage; vorzugsweise werden artgleiche Thermoplasten eingesetzt. Die Dichte des

Einsatzes ist verhältnismäßig hoch, damit eine gute Verankerung der Befestigungselemente gewährleistet ist. Sie beträgt 200 bis 1000, vorzugsweise 300 bis 800 kg•$m^{-3}$. Der Einsatz C kann beliebig geformt sein. In der Regel wird er kreisförmig sein, er kann aber auch ovale, viereckige oder eine unregelmäßige Form aufweisen. Er kann die gesamte Dicke der Kernschicht oder auch nur einen Teil davon ausfüllen. Je nach der von den Befestigungselementen aufzunehmenden Last beträgt sein Durchmesser 0,5 bis 10 cm, gemessen auf der Oberfläche der Kernschicht.

Das Verbinden des Einsatzes C mit der Kante der Kernschicht A kann grundsätzlich durch Verschweißen oder Verkleben erfolgen. Bei einem bevorzugten Verfahren geht man von einem ungeschäumten Plättchen oder von Granulat aus treibmittelhaltigem Thermoplast aus. Dieses kann z.B. wie in der DE-A 39 25 740 beschrieben, durch Extrudieren von treibmittelhaltem Granulat hergestellt werden. Als Treibmittel kommen bevorzugt niedrig siedende Flüssigkeiten in Frage, die den Thermoplasten nicht lösen, sondern höchstens quellen, vorzugsweise in Mengen von 1 bis 20, insbesondere von 2 bis 10 Gew.-%. Geeignete Treibmittel sind z.B. halogenierte Kohlenwasserstoffe, wie Dichlormethan und Chlorbenzol, Ketone, wie Aceton und Methylethylketon, Ether, Alkohole, Wasser und Gemische davon. Grundsätzlich können auch chemische Treibmittel, wie Azoverbindungen und Carbonate verwendet werden.

Man kann den Einsatz C auf verschiedene Weise in die Kernschicht A einbringen. Beispielsweise kann ein Loch in die Kernschicht gebohrt oder gestanzt werden, oder es kann eine Höhlung eingefräst werden. In dieses Loch bzw. in diese Höhlung wird nun das treibmittelhaltige Granulat eingefüllt bzw. das treibmittelhaltige Plättchen eingelegt. Man kann auch auf eine Höhlung verzichten und ein Plättchen einfach in die schaumförmige Kernschicht eindrücken. Falls die Kernschicht wabenförmig ist, kann Granulat in die Hohlräume der Waben eingefüllt werden.

Anschließend wird die Deckschicht B aufgebracht, wobei gegebenenfalls, insbesondere bei duroplastischen Deckschichten, ein Klebefilm dazwischengelegt werden kann. Dieses Gelege wird dann bei einer Temperatur verpreßt, bei der der Einsatz C erweicht und das Treibmittel verdampft. Dabei macht man sich den Effekt zunutze, daß die Glastemperatur des Thermoplasten c durch das Treibmittel drastisch erniedrigt wird, bei Polyethersulfon z.B. von etwa 225°C auf Temperaturen unter 100°C. Bei der Preßtemperatur erweicht also der Thermoplast a nicht, so daß die Struktur der schaumförmigen Kernschicht erhalten bleibt bzw. höchstens an den Berührungsstellen mit dem expandierenden Einsatz erweicht. Im Falle von Deckschichten aus einem duroplastischen Kunststoff b soll die Preßtemperatur oberhalb dessen Härtungstemperatur liegen.

Der aufschäumende Einsatz C dringt also in die Kernschicht A ein und verankert sich in dieser. Gleichzeitig verbindet sich die Deckschicht B, gegebenenfalls über einen Klebefilm mit der Kernschicht A, wobei im Fall von duroplastischem Kunststoff b dieser aushärtet.

Bei dem Verpressen kann gleichzeitig das Laminat verformt werden, so daß es außer der ebenen Struktur auch gewölbt, gebogen oder gekrümmt sein kann und auch unterschiedlich dicke Bereiche aufweisen kann.

In den aufgeschäumten Einsatz C können selbstschneidende Gewindebuchsen oder Spanplattenschrauben eingedreht werden. Ebenfalls lassen sich die gängigen Gewindeeinsätze für Thermoplaste durch "Warm-Einbetten" oder "Ultraschall-Einschweißen" einbringen. Es werden Auszugsfestigkeiten von > 1000 N erreicht.

Die erfindungsgemäßen Laminate eignen sich als Bauteile beim Innenausbau von Luftfahrzeugen, insbesondere für Zwischenwände, Stauschränke oder Klappen für Hutablagen; ferner beim Automobil- und Schiffsbau sowie bei Haushaltsgeräten.

Die in den Beispielen genannten Teile und Prozente beziehen sich auf das Gewicht.

Beispiel 1

In eine aus Grundplatte und abnehmbarem Rahmen bestehende, oben offene Form mit den lichten Maßen 300 x 300 x 10 mm wird eine 0,3 mm dicke, 300 x 300 mm messende Deckschicht aus einem mit 30 % Polysulfon getränktem Glasgewebe (Flächengewicht 296 g • $m^{-2}$) eingebracht. Darauf wird ein Polyethersulfon-Schaumstoff (Rohdichte 50 kg • $m^{-3}$, Abmessungen 295 x 295 x 11 mm) gelegt. Aus dem Schaumstoff ist in der Mitte ein Loch mit 40 mm Durchmesser ausgestanzt. In dieses Stanzloch wird ein Plättchen aus treibmittelhaltigem (12 % Butanon-2) Polyethersulfon von 40 mm Durchmesser und 3,5 mm Dicke eingelegt. Auf den Schaumkern wird eine Deckschicht wie oben beschrieben, gelegt. Der Aufbau wird in eine Presse gebracht und 5 min bei 200°C verpreßt. Dabei erweicht das Plättchen, schäumt auf und verankert sich in der Kernschicht. Gleichzeitig erweicht die Deckschicht und verbindet sich mit der Kernschicht. Nach dem Abkühlen erhält man eine ebene Verbundplatte, deren Stanzloch mit einem Einsatz der Rohdichte von ca. 450 kg • $m^{-3}$ ausgeschäumt ist. Dieser Einsatz weist eine hohe Schraubenbausziehfestigkeit auf.

Beispiel 2

Auf die in Beispiel 1 beschriebene Form legt man ein mit 50 Gew.-% ungehärtetem Phenolharz getränktes Glasgewebe (296 g • $m^{-2}$) der Abmessungen 350 x 350 mm. Dieses Prepreg drückt man an den Boden und die inneren Seitenflächen der Form an. Anschließend wird eine 300 x 300 x 11 mm messende Platte aus Polyethersulfon-Schaum (Rohdichte 50 kg • $m^{-3}$)) eingelegt, aus deren Mitte ein Loch von 25 mm Durchmesser ausgestanzt ist. Dieses Stanzloch füllt man mit treibmittelhaltigem (12 % Butanon-2) Polyethersulfon-Granulat. Über das Ganze wird eine Deckschicht, wie oben beschrieben, gelegt. Der Aufbau wird in eine Presse gebracht und 20 min bei 150° C verpreßt. Dabei erweicht das Granulat, schäumt auf und der Schaum verankert sich in der Kernschicht. Die klebrige Phenolharz-Deckschicht verbindet sich mit der Kernschicht, gleichzeitig härtet das Phenolharz aus.

Nach dem Abkühlen erhält man eine ebene Verbundplatte, deren Stanzloch mit einem Einsatz der Rohdichte von ca. 550 kg/$m^3$ ausgeschäumt ist. In die Mitte des Einsatzes dreht man eine Spanplattenschraube (Nenndurchmesser von 4 mm) 9 mm tief ein. Die Schraubenauszugskraft beträgt ca. 1100 N.

Beispiel 3

Man verfährt wie in Beispiel 2, stanzt aber kein Loch aus, sondern legt vor dem Aufbringen der oberen Deckschicht ein Plättchen aus treibmittelhaltigem Polyethyersulfon von 40 mm Durchmesser und 2,5 mm Dicke auf. Nach dem Verpressen und Abkühlen erhält man eine Verbundplatte mit einer an den Verstärkungsstellen im Kern erhöhten Rohdichte von ca. 500 kg/$m^3$.

Beispiel 4

Man verfährt wie in Beispiel 2, verwendet aber als Kernschicht eine Wabe aus phenolharzgetränktem Polyamid. Die Wabenhohlräume füllt man im Durchmesser von ca. 30 mm mit einem treibmittelhaltigen Polyethersulfon-Granulat mit einem Gewicht von ca. 20 mg/Korn. Nach dem Verpressen und Abkühlen ist die Wabe an den gefüllten Stellen mit einer Rohdichte von ca. 400 kg/$m^3$ ausgeschäumt.

**Patentansprüche**

**1.** Laminate mit stabilen Befestigungsstellen aus
A. einer schaum- oder wabenförmigen Kernschicht mit einer Dichte von 30 bis 150 kg • $m^{-3}$ aus einem temperaturbeständigen thermoplastischen oder duroplastischen Kunststoff a,
B. mindestens einer Deckschicht aus einem faserverstärkten temperaturbeständigen thermoplastischen oder duroplastischen Kunststoff b,
dadurch gekennzeichnet, daß die Kernschicht mindestens einen schaumförmigen Einsatz C einer Dichte von 200 bis 1000 kg • $m^{-3}$ aus einem temperaturbeständigen thermoplastischen Kunststoff c aufweist.

**2.** Laminate nach Anspruch 1, dadurch gekennzeichnet, daß die Kernschicht A 4 bis 40 mm dick ist, die Deckschicht B 0,1 bis 1,5 mm dick ist und der Durchmesser des Einsatzes C zwischen 0,5 und 10 cm beträgt.

**3.** Laminate nach Anspruch 1, dadurch gekennzeichnet, daß die Kunststoffe a, b und c eine Wärmeformbeständigkeit nach DIN 53 461 (B) von mindestens 130° C aufweisen.

**4.** Laminate nach Anspruch 1, dadurch gekennzeichnet, daß die Kernschicht schaumförmig ist und die Kunststoffe a und c jeweils artgleiche Thermoplasten sind.

**5.** Laminate nach Anspruch 4, dadurch gekennzeichnet, daß die Thermoplasten Polyethersulfone, Polysulfone, Polyetherimide oder Polyamide sind.

**6.** Laminate nach Anspruch 1, dadurch gekennzeichnet, daß die Kernschicht wabenförmig ist, und die Waben aus einem phenolharzgetränkten aromatischen Polyamid bestehen.